# EUROPEAN PATENT SPECIFICATION

(11) **EP 1 497 153 B1**
(45) Date of publication and mention of the grant of the patent: **03.06.2009**
(21) Application number: 02723931.8
(22) Date of filing: 22.04.2002
(51) Int. Cl.: B60N 2/06, B60N 2/075, B60N 2/46, B60R 7/04, B62D 27/06, B62D 65/00, B60N 2/28

(54) **ARTICLE ATTACHMENT SYSTEM**
ARTIKELBEFESTIGUNGSSYSTEM
SYSTEME DE FIXATION D'ARTICLE

(43) Date of publication of application: 19.01.2005
(73) Proprietor: Johnson Controls Technology Company, Holland, MI 49423 (US)
(72) Inventor: BONNES, Keith, A., Holland, MI 49424 (US); PHAM, Linh, H., Holland, MI 49423 (US); CLARK, Kenneth, M., Howell, MI 48843 (US); FLOWERDAY, Craig, D., Holland, MI 49424 (US)
(74) Representative: Marshall, Caroline
(86) International application number: PCT/US2002/012562
(87) International publication number: WO 2003/089265

(56) References cited:
- EP-A- 0 117 131
- EP-A- 0 841 211
- WO-A-01/28807
- US-B1- 6 203 088

## Description

### FILED OF THE INVENTION

The present invention relates to an article attachment system for a motor vehicle. The present invention relates more particularly to an article attachment system slideably mounting and removably attaching an article in a motor vehicle.

### BACKGROUND

The use of systems for mounting articles such as consoles in vehicles has been known for many years. In many systems, the articles or consoles are fixed in a single location and may include instruments, gauges, storage compartments, cup holders, as well as functional devices such as the gear shift lever, the parking brake actuator, side window adjusters, etc. It is also known that a variety of lids or covers may be used with consoles to conceal items such as coins, CD's, tapes, and other personal items used by the driver or vehicle occupants. Covers for such compartments are usually pivoted along one edge so that they may be opened to provide access and closed to provide either an armrest or other functionality. It is also known that storage devices may be located in instrument panels, including, for example, cigarette ashtrays, cup or can holders, etc.

In U.S. Patent No. 6,203,088 issued March 20, 2001, to Fernandez et al., and entitled "Sliding Console System", a system is described which includes a track to provide longitudinal movement for a console body within a vehicle. The illustrated embodiment also shows multiple console bodies which can each be adjusted independently of one another. The consoles may have power provided by an electric cable or sliding contact with the track so that one or more electrical devices can be contained in the consoles. The electrical functionality includes such features as controls for entertainment systems, climate control, seat adjustment, mirror adjustment, vehicle lighting, rear window defroster switches, as well as for use of such devices as radios, telephones, or computer power ports. The disclosure of the patent indicates that the console functionality may be used by the rear row seat occupants, as well as by the front row occupants, however, there is no suggestion in the patent of having a concealed positioning device or the capability to provide multiple articles for use with the track.

Another system involving fore and aft movement of a vehicle component is shown in U.S. Published Patent Application 2001/0030440 A1, published October 18, 2001. The "Vehicle Seat Assembly" includes a fixed center console between the front seats and a translatable center seat which moves from a rearward position in which it is aligned with the second row seats to a forward position in which it is located more closely to the front seats. In the preferred embodiment of this patent, the center seat includes a child safety seat mounted thereon.

A variety of other translatable console systems are known in the art. For example, Belsky et al. in U.S. Patent No. 3,356,409 issued December 5, 1967 for "Sliding Console" discloses a console that rides along the top of a raised floor portion and can be moved fore and aft. The device disclosed in this patent also includes an air passage to assist in moving air from in front of the console to the vehicle environment behind it.

A console box that can move forwardly and rearwardly is disclosed in U.S. Patent No. 5,951,084 issued to Okozaki et al. on September 14, 1999 for "Seat Structure for a Vehicle." The console forms a portion of a rear seat and includes a cavity and a portion which folds down to form an armrest. A carriage including rollers facilitates console movement.

Another console which includes a translatable portion is disclosed in U.S. Patent No. 4,685,729, issued to Heesch on August 11, 1987 for "Retractable Console for an Automotive Vehicle". In this device, a screw drive moves the portion so that the device can function as a passenger seat or a storage console.

Boulay et al. in U.S. Patent No. 6,152,522 issued on November 28, 2000 for "Vehicle" shows and describes a console which may be placed in various longitudinal locations on a ventilation shaft extending down the center axis of a vehicle. In addition to providing center console functionality of the type described above, the console assists in controlling cockpit air conditioning.

Krafeik in U.S. Patent No. 6,264,261, issued July 24, 2001 for "Vehicle Console" discloses a fore and aft translatable dual purpose console. When opened, anchorage rods for securing child seats are presented for use. The area beneath the open top can hold a variety of articles.

DeAngelis et al., in U.S. Patent No. 6,135,529 issued October 24, 200 for "Multi-Position Sliding Center Console", shows a carriage mounted console that can be moved fore and aft from between a front row of seats to a rearward location. A track extending below the console includes slots, and the console is moved or locked into position by manipulation of a latch.

Yet another sliding console is shown in Japanese Patent No. 62-194953. This device is similar to some of the aforementioned consoles and allows for the console to slide under the front instrument panel by fixing a guide rail between the cabin front and a position between the seats. In addition, the gear shift lever is separately slidable along the same rails to allow optimum functioning at the side of the front seat, while maintaining a compact construction when the shift lever and the consoles are stored, one within the other.
EP 0 117 131 discloses a longitudinal slide mechanism for a vehicle seat that includes first and second elongate members relatively slideable along their longitudinal axes. The cross-sections of the members are such that they cannot be separated in any direction transverse to the longitudinal axes. Means are provided for locking the members against longitudinal movement in any one of a plurality of positions.

While the general concept of console movement is addressed in the above patent art, generally ignored is the concealment of a positioning mechanism to reduce the introduction of contaminants and other foreign material that may otherwise interfere with the movement of the article, and to conceal pinch-points that may be created by the interface of moving or engaging parts. Also generally ignored is the removability of the console and the ability to interchange the console with other consumer oriented articles useful in connection with a vehicle interior. Also generally ignored is the ability to move the console or article to a position beneath or nested with an instrument panel within the vehicle.

For example, it would be advantageous to configure a positioning system for an article in a manner that minimizes introduction of contaminants and other foreign materials commonly found in vehicle interiors to improve the functionality of the positioning system. It would also be advantageous to provide an article attachment system with a positioning system for placing the article in one of a plurality of incremental positions in a manner that conceals engageable components that may create pinch-points or hazards to a user. It would be further advantageous to provide an article attachment system having a positioning system adapted to self-engage in the event that is misaligned by a user. It would be further advantageous to provide an article attachment system where the article may be removed from the vehicle. It would also be advantageous to provide an article attachment system capable of receiving other consumer-oriented articles useful with a vehicle interior that are adapted to engage the positioning system. It would also be advantageous to provide an article attachment system capable of sliding an article to a position beneath or nested with an instrument panel in a vehicle. It would also be advantageous to provide an article attachment system having an integral lighting system for improved night time illumination. It would also be advantageous to provide an article attachment system with a sensor indicating when the article is not secured within the vehicle.

Accordingly, it would be advantageous to provide an article attachment system having these or other advantageous features.

### SUMMARY OF THE INVENTION

The present invention relates to an article attachment system for a vehicle, having an elongated rail member adapted to attach to the vehicle where the rail member defines at least one partially enclosed space having at least one slide interface and a plurality of projections, and a bracket operably engaging the rail and adapted for mounting at least one article, and a positioning device operably engaging the bracket and having at least one extension adapted to move between an engaged position adapted for securing the article to the rail and a released position adapted for moving the article relative to the rail.

The present invention also relates to an article attachment system for a vehicle interior having an elongated rail member coupled to a floor portion of the vehicle interior where the rail member defines at least one partially concealed channel having a slide interface and a plurality of positioning elements; a bracket adapted to couple to an article, the bracket having at least one non-rotational glide operably engaging the slide interface for longitudinal movement along the rail member; and a positioning device coupled to the bracket for selectively securing the bracket at one of a plurality of locations along the rail member.

The present invention further relates to a kit for an article attachment system, having a rail member adapted for attachment to the interior portion of a vehicle where the rail defines at least one partially enclosed space having at least one surface adapted for slideable engagement, and a bracket member adapted to couple to an article and adapted to slideably engage the surface, and a positioning device adapted to releasably secure the article in any one of a plurality of locations on the rail member, and an actuator adapted to move the positioning device between an engaged position where movement of the article is prevented and a released position where movement of the console is permitted.

The present invention also relates to a method of providing an article attachment system for use in a vehicle interior, including the steps of providing a rail member adapted for coupling to the vehicle interior, the rail member defining a partially enclosed space having a surface, and providing a bracket adapted to receive an article and adapted to engage the surface, and coupling a positioning device to the bracket, where the positioning device is adapted for movement between an engaged position where the positioning device engages the rail member and a released position where the positioning device is substantially free of engagement from the rail member, and coupling the article to the rail member.

The present invention further relates to a system for removably attaching one or more articles in a vehicle interior and includes means for providing an elongated rail member having a partially concealed space, means for coupling the elongated rail member to the vehicle interior, means for mounting an article to the elongated rail member, and means for releasably securing the article in plurality of positions on the elongated rail member.

### BRIEF DESCRIPTION OF THE DRAWINGS

FIGURE 1 is an exploded perspective view from a rear end of an article attachment system according to a preferred embodiment of the present invention;

FIGURE 2 is a partial exploded perspective view, similar to that of FIGURE 1, but showing the additional detail of the system according to a preferred embodiment of the present invention.

FIGURE 3 is an end view from a front end of the article attachment system according to a preferred embodiment of the present invention.

FIGURE 4 is a perspective view of a portion of a positioning device for an article attachment system according to a preferred embodiment of the present invention.

FIGURE 5 is a perspective view of a portion of a rail member for an article attachment system according to a preferred embodiment of the present invention.

In the various drawings, like reference numerals are used to indicate like components.

### DETAILED DESCRIPTION OF THE PREFERRED AND ALTERNATE EMBODIMENTS

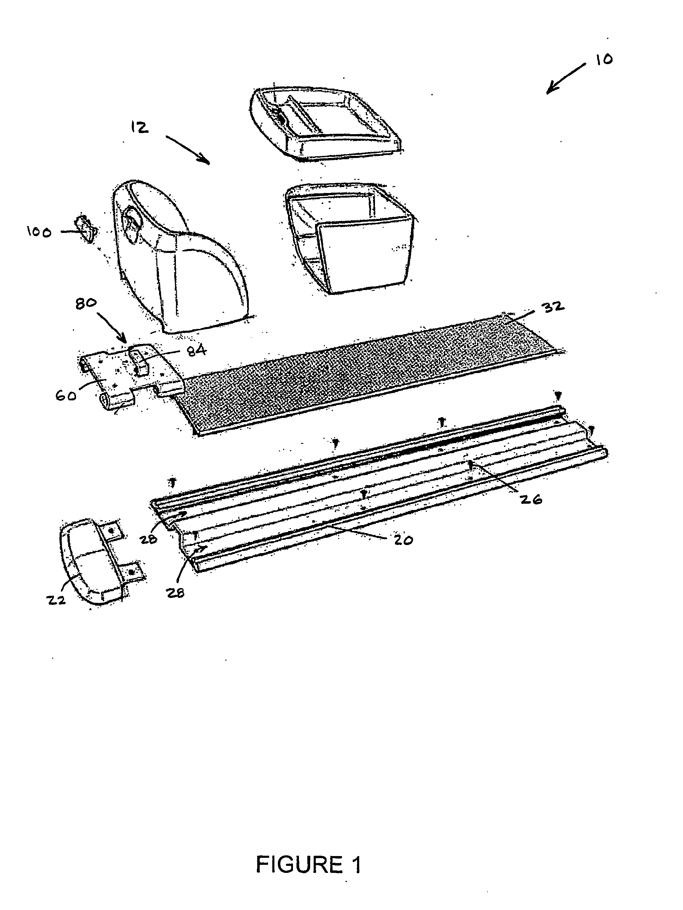

Referring to Figure 1, an article attachment system 10 is shown according to a preferred embodiment. Article attachment system 10 includes an elongated base member (e.g. track, runner, guide, etc.) shown schematically as a rail member 20, a movable support interface (e.g. slider, cover, etc.) shown schematically as a bracket 60, adapted to engage rail member 20 in a reciprocatingly slideable relationship and to support in a movable or stationary manner an article 12 (e.g. console, storage device, container, consumer object, etc.) shown schematically as a center console, and a releasable retainer interface (e.g. lock, latch, etc.) shown as a positioning device 80. Rail member 20, bracket 60, and positioning device 80, cooperate to provide a movable and selectively positionable article attachment system for use in a vehicle. In a particularly preferred embodiment, article attachment system 10 is shown for use within the interior of a motor vehicle (e.g. automobile, minivan, sport utility vehicle, truck, recreation vehicle, etc.). The article attachment system may also be used on an exterior portion of the vehicle, including, but not limited to, a truck bed or cargo storage area. In alternative embodiments, the article attachment system may be used internally or externally in any other vehicle applications such as farm or construction equipment, boats, aircraft or in non-vehicular applications such as production facilities, offices, shops, etc.

Article 12 is coupled to bracket 60 in any suitable conventional manner such as a sliding interference fit, snap-fit connectors, quarter-turn latches, quick-disconnects, spring clips (e.g. Z-axis clips, etc.) or mechanical fasteners (screws, bolts, rivets, etc.). In a particularly preferred embodiment, article 12 is a center console for a vehicle and may include such items as can or cup holders, storage bins, gear shift and brake components, instruments, lights, lids, push-push container holders, cavities, trays, electrical ports for connection of cellular telephones, computers, ports for connection of infotainment devices, such as DVD players, etc. The invention is not to be limited to any particular functionality for the article, the number of articles or any particular relationship between articles if more than one is employed. Two articles can abut one another, but they may, in fact, be arranged to nest, one within the other, etc. In an alternative embodiment, the bracket may be integrally formed with the article or the bracket may be combined with the positioning device as a single unit.

Article 12 may be selectively removed from vehicle by disengaging bracket 60 from rail 20 and removing the article, as will be further described. In an alternative embodiment, the article may be any consumer oriented object or device adapted for use in connection with a vehicle, and configured to receive a bracket, or have an integrally formed bracket, or be configured to be directly received on the rail in a fixed or slideable manner. Such alternative articles may include, among others, storage bins or compartments, cargo management devices, carrier racks, office or entertainment devices, holders, brackets, child safety seats, jump seats, storage platforms, tables, camping gear, etc.

Referring to Figures 1, 2, 3 and 5, the rail member 20, is shown according to a preferred embodiment. Rail member 20 has an elongated shape adapted for securing to the floor or base of a vehicle. In a particularly preferred embodiment, rail 20 is laterally (i.e. side to side) centered within the vehicle and extends in a longitudinal (i.e. fore and aft) direction between the front seats (not shown) and may extend between or beneath seats in one or more rows of rear seating (not shown) in the vehicle. Rail 20 may any suitable length and location within the vehicle to suit intended applications. For example, Rail 20 may extend forward to a position that allows article 12 to be positioned beneath, or nested with, an instrument panel or console (not shown) in a forward location of the vehicle interior. Rail 20 may also extend rearward to an intermediate location within the vehicle, or may extend the full length of the vehicle interior to a rearward position that abuts a rearward vehicle portion such as a end wall, lift gate, or cargo section (not shown). Rail 20 may also include a rear stop or end piece 22 that limits movement of article 12 when it reaches the rear end of rail 20. The rear end piece 22 may be removable or reconfigurable to allow article 12 to be removed from rail 20 by sliding article 12 off of the rear end of rail 20. The rear end piece 22 may also be reconfigurable in a manner that serves as a guide for sliding the article onto rail 20. The rail 20 may be provided as a single member or may be provided in multiple segments that may be selectively removed or joined for custom-configuring a rail pattern adapted for a specific vehicle or user application, where the rear end piece 22 may be joined to the rearward end of any such rail segments. In an alternative embodiment, one or more rails may be used and oriented in any suitable direction, or positioned in any suitable location within the vehicle. For example, the rails may be oriented laterally within the vehicle between seating rows, or may be adapted to align with a side door of a vehicle. In another alternative embodiment, the rail may be adapted for direct mounting or removal of articles.

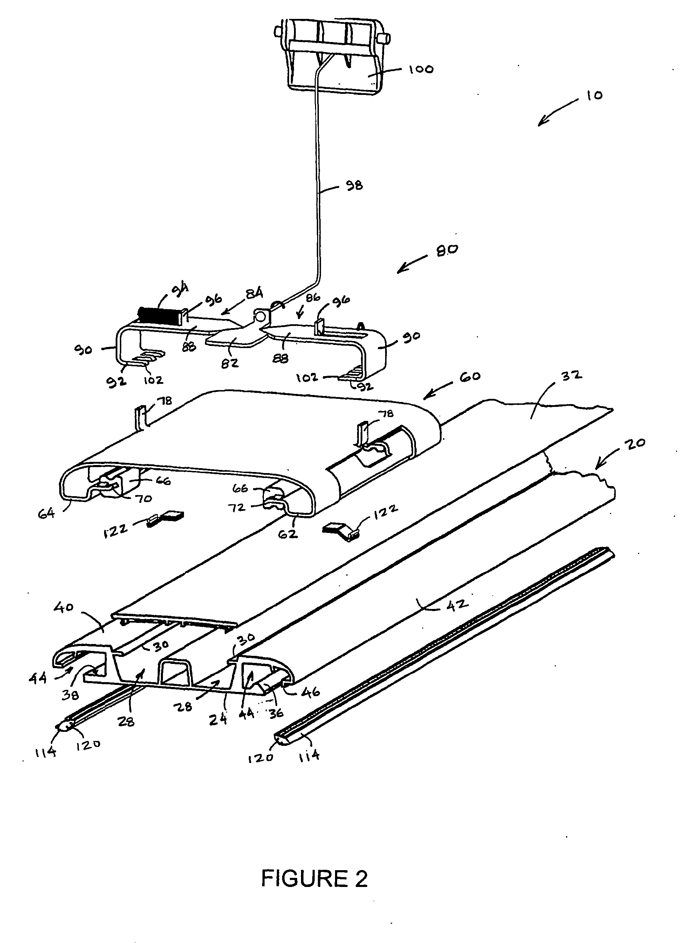

Referring further to Figure 2, 3 and 5, rail 20 has a generally flat base 24 that may be attached to a vehicle floor in any suitable manner such as with fasteners 26 (shown schematically as threaded fasteners such as screws or bolts, but may be rivets, adhesives, spring clips (e.g. Z-axis clips), etc.) located within channels 28, or alternatively may be welded to the vehicle floor or formed integrally with the vehicle floor during vehicle floor production. Rails 20 also include receiving structure, shown schematically as ledges 30 for securing a trim member or cover piece 32 that provides a top or cover for channels 28 and provides a generally smooth and continuous appearance for the upper portion of rail 20. In a particularly preferred embodiment, cover piece 32 is preferably a molded plastic piece adapted to engage ledges 30 in a snap-fit type engagement or by suitable spring-type clips (e.g. Z-axis clips, etc.), and is configured to extend along the length of rail 20. Base 24 also includes a first slide interface 34 having a lateral positioning device (e.g. stabilizer, guide, rib, etc.) shown schematically as an upwardly projecting ridge 36 on a first side of base 24 for interfacing with bracket 60 and for guiding the motion of bracket 60 along the length of rail 20 in a manner that minimizes lateral or side-to-side movement or wandering of bracket 60. A second side of base 24 includes a second slide interface (shown schematically as an upwardly facing surface 38) adapted to interface with bracket 60 in a manner that will be further described.

Referring further to Figures 2, 3 and 5, rail 20 includes lateral extensions 40 and 42 extending laterally outward from opposite sides of rail 20. Lateral extensions 40 and 42 are shown in a particularly preferred embodiment having a generally rounded contour forming an inner concealed channel or space 44 that has an inverted opening (e.g. downwardly facing) intended to provide a partially concealed area in which exposure to contaminants and other foreign objects into space 44 is minimized. Lateral extension 40 includes a lower portion 46 having a series of downwardly projecting positioning elements (shown schematically as projections 48) that create a generally U-shaped opening 50 between adjacent projections 48 in the general form of a linear rack, and which are adapted to cooperate with positioning device 80, as will be further described. In a particularly preferred embodiment, rail 20 is made of aluminum in an extrusion process. However, in alternative embodiments the rail may be made of magnesium, aluminum, steel, a metal alloy, plastic, or other suitable material in an extrusion, stamping, cold rolling or molding process, or other suitable process. In another alternative embodiment, both lateral extensions may be provided with downward projections for use with a positioning device having correspondingly mating projections. In further alternative embodiments, the partially concealed channel or space may be provided with any suitable orientation to minimize contaminant entry, such as, among others, an inwardly-facing channel or space, or an upwardly-facing channel or space having suitable trim, covers, shields or deflectors.

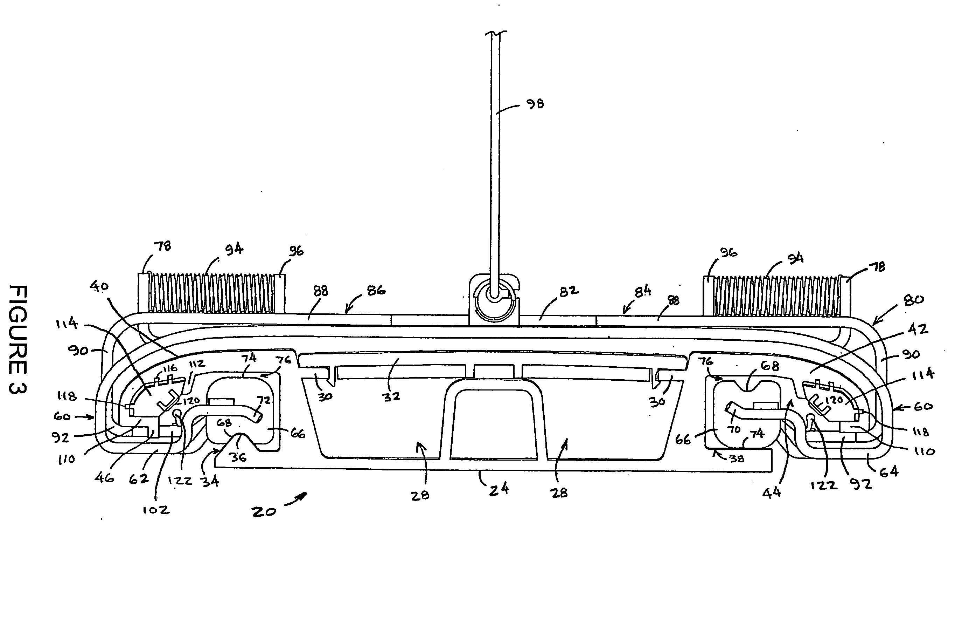

Referring to Figures 2 and 3, the bracket 60 is shown according to a preferred embodiment. Bracket 60 is adapted to couple article 12 to rail 20 in a slideable manner. In a particularly preferred embodiment, bracket 60 has a shape generally corresponding to the outline shape of rail 20 and includes inwardly projecting portions (shown schematically as arms or runners 62 and 64) that are configured to extend into space 44 for operable engagement with ridge 36 and surface 38 on the base 24 of rail 20. In the particularly preferred embodiment, runners 62 and 64 are coupled to a slideable interface (shown schematically as non-rotational glides 66) made of a material having properties of high lubricity and low friction, such as a resin material (PPO, ABS, polycarbonate, etc.) that may be impregnated with a low friction and high lubricity material such as silicone or Teflon ®. In the particularly preferred embodiment, runner 64 includes an upwardly-turned end 70 and runner 62 includes a downwardly turned end 72. Ends 70 and 72 are configured to receive glides 66 in a configuration that is intended to promote error-free installation such that the recess 68 of glide 66 is oriented downward to engage ridge 36 on base 24, and flat side 74 of glide 66 is oriented downward to engage surface 38 of base 24 to provide a slideable interface. The glides 66 are sized so that the upward side of glides 66 are positioned with a small tolerance gap 76 with the underside of lateral extensions 40 and 42 that provides suitable clearance along rail 20 to allow bracket 60 to travel smoothly in a longitudinal direction along rail 20. The upward side of glides 66 also serve to vertically restrain bracket 60 and article 12 in an upward direction since the vertical range of motion of glides 66 is limited to the tolerance gap, at which point further upward movement of glides 66, and thus bracket 60 and article 12, is restrained by the underside of lateral extensions 40 and 42. In an alternative embodiment, the glides may be made of plastic or any suitable materials having a composite, impregnated, or homogeneous composition or other structure intended to provide a low friction interface with the rail. In another alternative embodiment, glides may be omitted and the frictional interface provided by portions of the bracket having a suitable size and shape to engage the rail and having a low friction interface. Such a low friction interface may be provided, by way of example, as a coating, overlay, film or impregnation of the bracket material. In a further alternative embodiment, glides may be substituted with rollers, wheels or bearings.

Referring to Figures 2, 4 and 5, the positioning device 80 is shown according to a preferred embodiment. Positioning device 80 includes an actuator 82, and locking members (shown schematically as brackets 84 and 86) each having an upper flange portion 88, a side wall 90 and a lower flange portion 92. When actuated, actuator 82 is configured to extend brackets 84 and 86 in a laterally outward direction against an inwardly-directed biasing device (shown schematically as a spring 94) to release positioning device 80. When actuator 82 is released, biasing device 94 is configured to retract brackets 84 and 86 inwardly to engage positioning device 80 as will be further described. In a particularly preferred embodiment, upper flange portions 88 and actuator 82 have mating surfaces (shown schematically as angled cam surfaces), configured in a generally common horizontal plane adjacent to the upward side of bracket 60. Brackets 84 and 86 interface with bracket 60 in a laterally slideable manner but are restrained from movement in a longitudinal direction. Upper flange portions 88 include a tab portion 96 aligned with a pair of tab portions 78 on bracket 60 for receiving biasing device 94 (shown schematically as a compression coil spring). Actuator 82 includes an actuating and release extension (shown as actuating cable 98) that extends to a handle 100 on article 12 that may be actuated in a conventional manner for moving actuator 82 in a longitudinal direction. As actuator 82 moves in a first longitudinal direction for releasing positioning device 80, the cam surfaces of actuator 82 engage the cam surfaces of brackets 84 and 86 to extend brackets 84 and 86 outwardly. As actuator 82 is released, biasing device 94 moves brackets 84 and 86 inwardly, thus moving actuator 82 in a second longitudinal direction for engaging positioning device 80 with rail 20. In a particularly preferred embodiment, actuator 82 is made of plastic and brackets 84 and 86 are made of metal, however, other suitable materials may be used. In an alternative embodiment, biasing device may be any suitable device for urging the brackets in an engaged direction, such as a tension spring, leaf spring, torsion spring, resilient compressible material, etc. In another alternative embodiment, the brackets and actuator may be any suitable material and cam surfaces may have any suitable shape for moving the brackets to a released position. In a further alternative embodiment, the positioning device may be integrated with the bracket or article for mounting on the rail in a fixed or a slideable relationship.

Referring further to Figures 3, 4 and 5, lower flange portions 92 of brackets 84 and 86 have extensions shown schematically as inward projections 102 configured to releasably engage the openings 50 in base 20. In a particularly preferred embodiment, lower flange portion 92 and projections 102 form a linear rack and projections 92 may be shaped in the form of a rectangle with square corners, or may have angled or tapered sides, or may have rounded corners. Projections 102 are configured to releasably engage rail 20 by extending into the openings 50 between the downwardly extending projections 48 of lateral extension 40 when positioning device 80 is engaged to prevent longitudinal movement of bracket 60 on rail 20. Projections 102 retract from openings 50 when positioning device 80 is released to permit longitudinal movement of bracket 60 on rail 20. The biasing device 94 is further intended to provide a self-correcting positioning feature by creating a force urging projections 102 inward so that if projections 102 are in an intermediate position where they are not aligned with openings 50 such that they are obstructed by downwardly extending portions 48, any movement of the vehicle which creates inertial movement of the article 12 and bracket 60 in a longitudinal direction will result in projections 102 aligning with, and engaging openings 50. In an alternative embodiment, projections may be provided on only a single lateral side of rail for engaging the rail projections or the projections may be omitted from the positioning device and spring-biased catches, latches, or pawls may be provided to engage openings or notches provided in the base. In a further alternative embodiment, the positioning device may engage the rail by use of conventional securing devices such as a ski-boot type latch, a quarter turn latch, a push-button type latch, set-screw type catches, etc. In another alternative embodiment, the positioning device may include track members such those used in conventional seat track applications.

Referring further to Figures 2 and 3, an electrification system for article attachment system 10 is shown according to a preferred embodiment. The electrification system provides a source of electrical power from the vehicle electrical system (such as, but not limited to, 12 volt DC - not shown) to article 12 along the length of rail 20. The inward portion of lateral extensions 40 and 42 include mounting structure (shown schematically as ledge 110 and rib 112) for receiving an elongated conductor carrier (shown schematically as a carrier body 114). In a particularly preferred embodiment, carrier body 114 is an extruded shape made of an electrically insulating material such as plastic, configured to conform with the inward contour of lateral extensions 40 and 42, and extend along the length of rail 20. Carrier body 114 is formed with tolerance adjustment features (shown schematically as extensions 116) that are adapted for insertion into receptacles 118 (e.g. grooves, slots, channels, etc.). The extensions 116 allow the position of carrier body 114 to be adjusted to accommodate tolerance variations along the length of rail 20 by shifting the position of extensions 116 within receptacles 118. Carrier body 114 includes a conductor strip 120 having a contact portion and leg portions that may be inserted into corresponding slots or openings on carrier body 114. Conductors (e.g. wires, leads, pigtails, etc. - not shown) extend from conductor strip 120 to a conventional vehicle electrical power source (not shown). In a particularly preferred embodiment, conductor strip 120 is made of copper or aluminum or other suitable conductive material. In an alternative embodiment, carrier body may have any shape adapted to support a conductor along the rail, or may be integrally formed with the rail (e.g. a rail with a conductive insert or overlay portion, etc.). In another alternative embodiment, a flexible circuit may be provided with wiring that is adapted for accommodating a movable article, such as, for example, a selective take-up and let-out apparatus (e.g. reel device, wires configured in a U-shaped layout, etc.). In a further alternative embodiment, suitable electrical receptacles may be provided at locations along the rail for receiving wire extensions (e.g. pigtails, etc.) from an article to provide electricity to an article mounted on the rail.

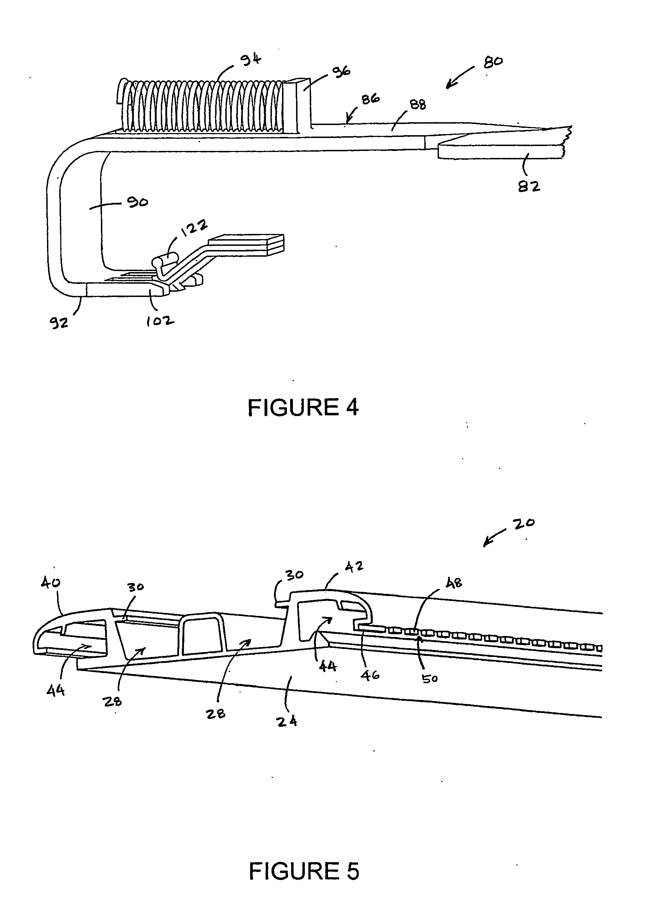

Referring further to Figures 3 and 4, bracket 60 includes a resilient electrical contact 122 adapted to contact conductor strip 120 along the length of rail 20. In a particularly preferred embodiment, resilient contact 122 is biased into a contact relationship with conductor strip 120 to provide electrical conduction between contact 122 and conductor strip 120 along the length of rail 20. Conductors (e.g. wires, leads, pigtails, etc. - not shown) are operatively coupled to contact and routed to provide a source of electricity to article 12. The electrical system may also include lights (e.g. light strips, LEDs, etc. - not shown) positioned along, or formed within rail 20 for use in illuminating a portion of the vehicle interior when the interior vehicle lights are switched on, or when a vehicle door is opened, using a conventional power supply and switch configuration. Rail 20 may also include sensors (not shown) adapted to provide an alarm or signal when the article is detached from the rail. In a particularly preferred embodiment, the electrical power is twelve (12) volts, direct current (DC). In an alternative embodiment, other voltage levels adapted for use with article 12 may be provided through the use of suitable voltage regulation devices (e.g. transformers, etc. - not shown).

It is important to note that the construction and arrangement of the elements of the article attachment system provided herein are illustrative only. Although only a few exemplary embodiments of the present invention have been described in detail in this disclosure, those skilled in the art who review this disclosure will readily appreciate that many modifications are possible in these embodiments (such as variations in installation location and orientation within a vehicle, sizes, structures, shapes and proportions of the various elements, mounting arrangements, use of materials, combinations of shapes, etc.) without materially departing from the novel teachings and advantages of the invention. For example, the article attachment system may be used in the interior of any vehicle or non-vehicular application. Also the rail may have any suitable shape, length, location or orientation for use in connection with attaching articles for slideable or fixed positioning. Additionally, the positioning device may include any suitable securing device such as intermeshing elements, quick-releases, latches, etc. configured to releasably secure the bracket and article to the rail in a safe and convenient manner to permit ease of movement or removal, but also retain the article in position in the event of sudden vehicle braking or impact. Any other positioning device already known for vehicle use may be used, for example those used for manual seat adjustment, can be substituted provided that the rail, bracket and positioning device operate smoothly, and that the article be locked securely thereto to avoid separation of the article in the event of a sudden braking or an impact situation. Any form of trim or cover can be applied on the rail for aesthetic and cleanliness purposes, that the rail and bracket be attractive, easily cleanable, etc. Further, it is readily apparent that the rail may be provided in a wide variety of shapes, sizes, thickness, and engagement profiles and adapted for installation along the roof, floor and sides of a vehicle, or within a cargo area or other suitable location within a vehicle. Also, the enclosed space formed by the rail may be provided in any suitable shape by any suitable rail configuration to conceal the moving or engaging parts of the positioning device to minimize exposure to users and to provide a streamlined, unobtrusive, aesthetically pleasing appearance. It is also readily apparent that articles may be in the form of any removable object useful in connection with a vehicle and may be designed with any profile suitable for attaching to the rail for stationary use or slidable movement along the rail. The article in the form of a console may be any suitable size to hold beverage cups, cans, and the like and includes electrical ports, such as those used for cigarette lighters, the connection of cellular telephone charging devices, etc. Accordingly, all such modifications are intended to be within the scope of the invention.

## Claims

1. An article attachment system (10) for a vehicle, comprising:
an elongated rail member (20) adapted to attach to the vehicle;
the rail member (20) defining at least one partially enclosed space (44) having at least one slide interface (34, 38) and a plurality of projections (48);
a bracket (60) operably engaging the elongated rail member (20) and adapted for mounting at least one article (12);
a positioning device (80) operably engaging the bracket (60) and having at least one extension (84, 86) adapted to move between an engaged position adapted for securing the article (12) to the elongated rail member (20) and a released position adapted for moving the article (12) relative to the elongated rail member (20).
**characterised in that** the at least one slide interface (34, 38) is provided along an interior surface of the rad member (20) and the bracket (20) has at least one glide (66) slidably engaging the slide interface on the interior surface the elongated rad member.

2. The article attachment system (10) of Claim 1, wherein the elongated rail member (20) is oriented longitudinally within the vehicle.

3. The article attachment system (10) of Claim 1, wherein the elongated rail member (20) is oriented laterally within the vehicle.

4. The article attachment system (10) of Claim 1, wherein the elongated rail member (20) is adapted to attach to an external portion of the vehicle.

5. The article attachment system (10) of Claim 1, wherein the elongated rail member (20) is adapted to attach to an interior portion of the vehicle.

6. The article attachment system (10) of Claim 1, wherein the elongated rail member (20) extends to a forward position adapted to allow the article (12) to nest with an instrument panel in the vehicle.

7. The article attachment system (10) of Claim 1, wherein the elongated rail member (20) is at least one rail segment adapted to be selectively coupled and uncoupled to another rail segment.

8. The article attachment system (10) of Claim 1, wherein the elongated rail member (20) and bracket (60) are configured to vertically restrain the article (12).

9. The article attachment system (10) of Claim 1, wherein the elongated rail member (20) includes a fixed conductor strip (120) adapted to deliver electrical power to the article (12).

10. The article attachment system (10) of Claim 9, wherein the conductor strip (120) is coupled to the rail member (20) by a carrier (114) having at least one tolerance adjusting device (116).

11. The article attachment system (10) of Claim 9, wherein the bracket (60) includes a contact (122) biased for sliding engagement with the conductor strip (120).

12. The article attachment system (10) of Claim 1, wherein the at least one glide (66) is two glides.

13. The article attachment system (10) of Claim 12, wherein the glide (66) is a low-friction, high-lubricity material.

14. The article attachment system (10) of Claim 1, wherein the bracket (60) further comprises runners (62, 64) operably engaging the slide interface (34, 38).

15. The article attachment system (10) of Claim 1, wherein the slide interface (34, 38) further comprises a lateral positioning device (36).

16. The article attachment system (10) of Claim 1, further comprising a trim piece (32) coupled to the elongated rail member (20).

17. The article attachment system (10) of Claim 1, wherein the elongated rail member (20) is adapted to removably receive the article (12).

18. The article attachment system (10) of Claim 1, wherein the article (12) is one of a center console, a storage bin, a compartment, a cargo management device, a holder, an article mounting bracket, a storage rack, a child safety seat, a jump seat, a storage platform, a table, a recreational item, or a sporting good.

19. The article attachment system (10) of Claim 1, wherein the positioning device (80) is biased in a self-correcting direction.

20. The article attachment system (10) of Claim 1, wherein the positioning device (80) includes an actuator (82) capable of remote actuation and operable to move the extension (84, 86) between the engaged position and the released position.

21. The article attachment system (10) of claim 1;
wherein the elongated rail member (20) comprises a first electrical conductor (120) and at least one partially concealed channel (44) having a slide interface (34, 38);
and wherein the glide (66) comprises at least one non-rotational glide slidably engaging the slide interface (34, 38) for longitudinal movement along the elongated rail member (20) and the bracket (60) includes a second electrical conductor (122) configured to movably engage the first electrical conductor (120).

22. The article attachment system (10) of Claim 21, wherein the elongated rail member (20) includes a plurality of positioning elements (48).

23. The article attachment system (10) of Claim 21, wherein the positioning device (80) includes an actuator (82) adapted for remote actuation from the article (12).

24. The article attachment system (10) of Claim 21, wherein the elongated rail member (20) includes at least one lateral extension portion (40, 42).

25. The article attachment system (10) of Claim 21, wherein the elongated rail member (20) is integrally formed with a floor portion of the vehicle.

26. The article attachment system (10) of Claim 21, wherein the elongated rail member (20) includes an end piece (22) adapted to limit the position of the article (12).

27. The article attachment system (10) of Claim 21, wherein the positioning device (80) includes at least one locking member (84, 86) operably engaging the actuator (82) for extension and retraction in a lateral direction.

28. The article attachment system (10) of Claim 27, wherein the bracket (60) and the positioning device (80) coact through a biasing device (94).

29. The article attachment system (10) of Claim 28, wherein the biasing device (94) is a spring.

30. The article attachment system (10) of Claim 29, wherein the biasing device (94) provides a self-correcting interaction between the locking member (84, 86) and the elongated rail member (20).

31. The article attachment system (10) of Claim 21, wherein the glide (66) is configured for coupling to the bracket (60) only in a single orientation.

32. The article attachment system (10) of Claim 1 comprising:
an electrification stem configured to provide a source of electricity from the rail member (20) to the article (12); and
an actuator (82) adapted to move the positioning device (80) between an engaged position where movement of the article (12) is prevented and a released position
where movement of the article (12) is permitted.

33. The system (10) of Claim 32, wherein the rail member (20) includes a plurality of projections (48) disposed within the partially enclosed space (44).

34. The system (10) of Claim 33, wherein the rail member (20) includes a plurality of projections (48) only on a single side of the rail member (20).

35. The system (10) of Claim 32, wherein the glide (66) is adapted to interface between the bracket (60) and the interior surface.

36. The system (10) of Claim 32, wherein the glide (66) is non-rotational.

37. The system (10) of Claim 32, wherein the electrification system further comprises a conductive (20) coupled to the rail member (20).

38. The system (10) of Claim 32, further comprising an end piece (22) adapted to couple to an end of the rail member (20).

39. The system (10) of Claim 32, further comprising a biasing device (94) adapted to bias the positioning device (80) in a self-correcting direction.

40. The system (10) of Claim 32, wherein the article (12) is one of a storage bin, a compartment, a cargo management device, a holder, an article mounting bracket, a storage rack, an article carrier, a child safety seat, a jump seat, a storage platform, a table, a recreational item, or a sporting good.

41. The system (10) of Claim 32, wherein the rail member (20) is a plurality of rail member segments adapted to be selectively coupled and uncoupled.

42. A method of providing an article attachment system (10) for use in a vehicle interior, the method comprising:
providing a rail member (20) adapted for coupling to the vehicle, the rail member (20) defining a partially enclosed space (44) having a slide interface (34, 38);
providing a bracket (60) at least partially surrounding the rail member (20) and adapted to receive an article (12);
providing at least one arm (62, 64) extending from the bracket (60) into the partially enclosed space (44), the arm (62, 64) including a glide (66) adapted to engage the slide interface (34,38);
coupling a positioning device (80) to the bracket (60), the positioning device (80) adapted for movement between an engaged position where the positioning device (80) engages the rail member (20) and a released position where the positioning device (80) is substantially free of engagement from the rail member (20); and
coupling the article (12) to the rail member (20).

43. The method of Claim 42, wherein the slide interface (34, 38) provides a slideable interface with the glide (66).

44. The method of Claim 42, wherein the slide interface (34, 35) provides a non-rotational interface with the bracket (60).

45. The method of Claim 42, wherein the slide interface (34, 38) provides a fixed interface with the bracket (60).

46. The method of Claim 42, further comprising the step of providing a biasing device (94) adapted to urge the positioning device (80) into the engaged position.

47. The method of Claim 42, further comprising the step of providing a trim portion (32) adapted to couple to the rail member (20).

48. The method of Claim 42, further comprising the step of providing an actuator (82) adapted to move the positioning device (80) between the engaged position and the released position.

49. The method of Claim 42, further comprising the step of providing an electrification system adapted to couple to the rail member (20) for providing electricity from a vehicle electricity source to the article (12).

50. The article attachment system of Claim 1
wherein the bracket (60) at least partially surrounds the elongated rail member (20) and lateral extension and having an arm (62, 64) projecting into the space (44);
and wherein the glide (66) comprises a non-rotational low friction member interfacing between the arm (62, 64) and the slide interface (34, 38) configured to permit movement of the article (12) along the elongated rail member (20).

51. The systems of Claim 50, wherein the vehicle comprises a vehicle interior portion.

52. The system of Claim 50, wherein the vehicle comprises a vehicle exterior portion.

53. The system of Claim 52, wherein the vehicle exterior portion is a cargo storage area.

54. The system of Claim 50, wherein the elongated rail member (20) comprises a lateral extension (40, 42) that includes the slide interface (34, 38) and the arm (62, 64) projects at least partially beneath the lateral extension (40, 42) for moving the article (20) relative to the elongated rail member (20).

55. The system of Claim 54, wherein the elongated rail member (20) further comprises two lateral extensions (40, 42) and two slide interfacer (34, 38).

56. The system of Claim 50, further comprising an electrification system having at least one resilient contact (122) configured to provide electricity from a vehicle electrical source to the article (12).

## Patentansprüche

1. Ein Artikelbefestigungssystem (10) für ein Fahrzeug, mit:
einem länglichen Schienenelement (20), das zum Anbringen an dem Fahrzeug eingerichtet ist,
wobei das Schienenelement (20) zumindest einen teilweise umschlossenen Raum (44) mit mindestens einer Schiebe-Schnittstelle (34,38) und mehreren Vorsprüngen (48) definiert,
einem funktionsmäßig mit dem länglichen Schienenelement (20) mit Eingriff stehenden und zur Montage zumindest eines Artikels (12) eingerichteten Halter (60),
einer Positionierungsvorrichtung (80), die funktionsmäßig mit dem Halter (60) in Eingriff ist und zumindest eine Erweiterung (84,86) besitzt, die zur Bewegung zwischen einer Eingriffsposition, welche zum Sichern des Artikels (12) an dem länglichen Schienenelement (20) eingerichtet ist, und einer Freigabeposition, welche zum Bewegen des Artikels (12) relativ zu dem länglichen Schienenelement (20) eingerichtet ist, eingerichtet ist,
**dadurch gekennzeichnet, dass** die zumindest eine Schiebe-Schnittstelle (34,38) entlang einer Innenfläche des Schienenelements (20) vorgesehen ist und der Halter (60) zumindest ein Gleitstück (66) besitzt, das verschiebbar mit der Schiebe-Schnittstelle an der Innenfläche des länglichen Schienenelements in Eingriff ist.

2. Das Artikelbefestigungssystem (10) gemäß Anspruch 1, wobei das längliche Schienenelement (20) longitudinal in dem Fahrzeug ausgerichtet ist.

3. Das Artikelbefestigungssystem (10) gemäß Anspruch 1, wobei das längliche Schienenelement (20) lateral in dem Fahrzeug ausgerichtet ist.

4. Das Artikelbefestigungssystem (10) gemäß Anspruch 1, wobei das längliche Schienenelement (20) zum Anbringen an einem externen Abschnitt des Fahrzeugs eingerichtet ist.

5. Das Artikelbefestigungssystem (10) gemäß Anspruch 1, wobei das längliche Schienenelement (20) zum Anbringen an einem Innenabschnitt des Fahrzeugs eingerichtet ist.

6. Das Artikelbefestigungssystem (10) gemäß Anspruch 1, wobei das längliche Schienenelement (20) sich zu einer vorderen Position erstreckt, die so eingerichtet ist, dass der Artikel (12) in eine Instrumententafel in dem Fahrzeug eingesteckt werden kann.

7. Das Artikelbefestigungssystem (10) gemäß Anspruch 1, wobei das längliche Schienenelement (20) zumindest ein Schienensegment ist, das zum selektiven Koppeln und Entkoppeln mit einem anderen Schienensegment eingerichtet ist.

8. Das Artikelbefestigungssystem (10) gemäß Anspruch 1, wobei das längliche Schienenelement (20) und der Halter (60) zum vertikalen Zurückhalten des Artikels (12) konfiguriert sind.

9. Das Artikelbefestigungssystem (10) gemäß Anspruch 1, wobei das längliche Schienenelement (20) einen feststehenden Leiterstreifen (120) aufweist, der zum Liefern von elektrischer Leistung zu dem Artikel (12) eingerichtet ist.

10. Das Artikelbefestigungssystem (10) gemäß Anspruch 9, wobei der Leiterstreifen (120) mit dem Schienenelement (20) durch einen Träger (114) mit zumindest einer Toleranz-Einstellvorrichtung (116) gekoppelt ist.

11. Das Artikelbefestigungssystem (10) gemäß Anspruch 9, wobei der Halter (60) einen Kontakt (122) umfasst, der für einen Schiebeeingriff mit dem Leiterstreifen (120) vorbelastet ist.

12. Das Artikelbefestigungssystem (10) gemäß Anspruch 1, wobei das zumindest eine Gleitstück (66) zwei Gleitstücke ist.

13. Das Artikelbefestigungssystem (10) gemäß Anspruch 12, wobei das Gleitstück (66) ein Material mit niedriger Reibung und hoher Schmierfähigkeit ist.

14. Das Artikelbefestigungssystem (10) gemäß Anspruch 1, wobei der Halter (60) ferner Laufstücke (62,64) umfasst, die funktionsmäßig mit der Schiebe-Schnittstelle (34,38) im Eingriff sind.

15. Das Artikelbefestigungssystem (10) gemäß Anspruch 1, wobei die Schiebe-Schnittstelle (34,38) ferner eine laterale Positionierungsvorrichtung (36) umfasst.

16. Das Artikelbefestigungssystem (10) gemäß Anspruch 1, ferner mit einem Verkleidungsteil (32), das mit dem länglichen Schienenelement (20) gekoppelt ist.

17. Das Artikelbefestigungssystem (10) gemäß Anspruch 1, wobei das längliche Schienenelement (20) zum entfernbaren Aufnehmen des Artikels (12) eingerichtet ist.

18. Das Artikelbefestigungssystem (10) gemäß Anspruch 1, wobei der Artikel (12) eine Mittelkonsole, ein Ablagefach, ein Fach, eine Ladungs-Verwaltungsvorrichtung, ein Halter, ein Artikel-Befestigungshalter, eine Lagergestell, ein Kinder-Sicherheitssitz, ein Notsitz, eine Lade-Plattform, ein Tisch, ein Freizeitgegenstand, oder ein Sportgerät ist.

19. Das Artikelbefestigungssystem (10) gemäß Anspruch 1, wobei die Positionierungsvorrichtung (80) in einer selbstkorrigierenden Richtung vorbelastet ist.

20. Das Artikelbefestigungssystem (10) gemäß Anspruch 1, wobei die Positionierungsvorrichtung (80) einen Betätiger (82) umfasst, der fernbetätigt werden kann und zum Bewegen der Erweiterung (84,86) zwischen der Eingriffsposition und der Freigabeposition bedienbar ist.

21. Das Artikelbefestigungssystem (10) gemäß Anspruch 1, wobei das längliche Schienenelement (20) einen ersten elektrischen Leiter (120) und zumindest einen teilweise verdeckten Kanal (44) mit einer Schiebe-Schnittstelle (34,38) aufweist,
und wobei das Gleitstück (66) zumindest ein nicht-drehbares Gleitstück aufweist, das verschiebbar mit der Schiebe-Schnittstelle (34,38) für eine Longitudinalbewegung entlang dem länglichen Schienelement (20) in Eingriff ist, und der Halter (60) einen zweiten elektrischen Leiter (122) aufweist, der zum beweglichen Eingriff mit dem ersten elektrischen Leiter (120) konfiguriert ist.

22. Das Artikelbefestigungssystem (10) gemäß Anspruch 21, wobei das längliche Schienenelement (20) mehrere Positionierungselemente (48) aufweist.

23. Das Artikelbefestigungssystem (10) gemäß Anspruch 21, wobei die Positionierungsvorrichtung (80) einen Betätiger (82) aufweist, der für eine Fernbetätigung von dem Artikel (12) eingerichtet ist.

24. Das Artikelbefestigungssystem (10) gemäß Anspruch 21, wobei das längliche Schienenelement (20) zumindest einen lateralen Erweiterungsabschnitt (40,42) aufweist.

25. Das Artikelbefestigungssystem (10) gemäß Anspruch 21, wobei das längliche Schienenelement (20) integral mit einem Bodenabschnitt des Fahrzeugs ausgebildet ist.

26. Das Artikelbefestigungssystem (10) gemäß Anspruch 21, wobei das längliche Schienenelement (20) ein Endstück (22) aufweist, dass zum Begrenzen der Position des Artikels (12) eingerichtet ist.

27. Das Artikelbefestigungssystem (10) gemäß Anspruch 21, wobei die Positionierungsvorrichtung (80) zumindest ein Verriegelungselement (84,86) aufweist, das funktionsmäßig mit dem Betätiger (82) für eine Erweiterung und ein Zurückziehen in einer lateral Richtung in Eingriff ist.

28. Das Artikelbefestigungssystem (10) gemäß Anspruch 27, wobei der Halter (60) und die Positionierungsvorrichtung (80) durch eine Vorbelastungsvorrichtung (94) zusammenwirken.

29. Das Artikelbefestigungssystem (10) gemäß Anspruch 28, wobei die Vorbelastungsvorrichtung (94) eine Feder ist.

30. Das Artikelbefestigungssystem (10) gemäß Anspruch 29, wobei die Vorbelastungsvorrichtung (94) eine selbstkorrigierende Interaktion zwischen dem Verriegelungselement (84,86) und dem länglichen Schienenelement (20) bietet.

31. Das Artikelbefestigungssystem (10) gemäß Anspruch 21, wobei das Gleitstück (66) für eine Koppelung mit dem Halter (60) nur in einer einzelnen Orientierung konfiguriert ist.

32. Das Artikelbefestigungssystem (10) gemäß Anspruch 1, mit:
einem Elektrifizierungssystem, dass zum Liefern einer Quelle von Elektrizität von dem Schienenelement (20) zu dem Artikel (12) konfiguriert ist, und
einem Betätiger (82) der zum Bewegen der Positionierungsvorrichtung (80) zwischen einer Eingriffsposition, an der die Bewegung des Artikels (12) verhindert ist, und einer Freigabeposition, an der die Bewegung des Artikels (12) zugelassen ist, eingerichtet ist.

33. Das System (10) gemäß Anspruch 32, wobei das Schienenelement (20) mehrere Vorsprünge (48) aufweist, die in dem teilweise umschlossenen Raum (44) angeordnet sind.

34. Das System (10) gemäß Anspruch 33, wobei das Schienenelement (20) mehrere Vorsprünge (48) nur an einer einzelnen Seite des Schienenelements (20) aufweist.

35. Das System (10) gemäß Anspruch 32, wobei das Gleitstück (66) für eine Koppelung zwischen dem Halter (60) und der Innenfläche eingerichtet ist.

36. Das System (10) gemäß Anspruch 32, wobei das Gleitstück (66) nicht-drehbar ist.

37. Das System (10) gemäß Anspruch 32, wobei das Elektrifizierungssystem ferner einen leitenden Streifen (120) aufweist, der mit dem Schienenelement (20) gekoppelt ist.

38. Das System (10) gemäß Anspruch 32, ferner mit einem Endstück (22), das zum Koppeln mit einem Ende des Schienenelements (20) eingerichtet ist.

39. Das System (10) gemäß Anspruch 32, ferner mit einer Vorbelastungsvorrichtung (94), die zum Vorbelasten der Positionierungsvorrichtung (80) in einer selbstkorrigierenden Richtung eingerichtet ist.

40. Das System (10) gemäß Anspruch 32, wobei der Artikel (12) ein Ablagefach, ein Fach, eine Ladungs-Verwaltungsvorrichtung, ein Halter, ein Artikel-Montagehalter, ein Lagergestell, ein Artikelträger, ein Kinder-Sicherheitssitz, ein Notsitz, eine Ladeplattform, ein Tisch, ein Freizeitgegenstand oder ein Sportartikel ist.

41. Das System (10) gemäß Anspruch 32, wobei das Schienenelement (20) mehrere Schienenelementsegmente ist, die für eine selektive Koppelung und Entkoppelung eingerichtet sind.

42. Ein Verfahren zum Vorsehen eines Artikelbefestigungssystems (10) zur Verwendung in einem Fahrzeug-Inneren, wobei das Verfahren aufweist:
Vorsehen eines Schienenelements (20), das zum Koppeln mit dem Fahrzeug eingerichtet ist, wobei das Schienenelement (20) einen teilweise umschlossenen Raum (44) mit einer Schiebe-Schnittstelle (34,38) definiert,
Vorsehen eines Halters (60), der zumindest teilweise das Schienenelement (20) umgibt und zur Aufnahme eines Artikels (12) eingerichtet ist,
Vorsehen zumindest eines Arms (62,64), der sich von dem Halter (60) in den teilweise umschlossenen Raum (44) erstreckt, wobei der Arm (62,64) eine Gleitstück (66) aufweist, das zum Eingriff mit der Schiebe-Schnittstelle (34,38) eingerichtet ist,
Koppeln einer Positionierungsvorrichtung (80) mit dem Halter (60), wobei die Positionierungsvorrichtung (80) für eine Bewegung zwischen einer Eingriffsposition, an der die Positionierungsvorrichtung (80) mit dem Schienenelement (20) in Eingriff ist, und einer Freigabeposition, an der die Positionierungsvorrichtung (80) im wesentlichen außer Eingriff mit dem Schienenelement (20) ist, eingerichtet ist, und
Koppeln des Artikels (12) mit dem Schienenelement (20).

43. Das Verfahren gemäß Anspruch 42, wobei die Schiebe-Schnittstelle (34,38) eine verschiebbare Schnittstelle bzw. Koppelung mit dem Gleitstück (66) bietet.

44. Das Verfahren gemäß Anspruch 42, wobei die Schiebe-Schnittstelle (34,38) eine nicht-drehbare Schnittstelle bzw. Koppelung mit dem Halter (60) bietet.

45. Das Verfahren gemäß Anspruch 42, wobei die Schiebe-Schnittstelle (34,38) eine feststehende Schnittstelle bzw. Koppelung mit dem Halter (60) bietet.

46. Das Verfahren gemäß Anspruch 42, ferner mit dem Schritt des Vorsehens einer Vorbelastungsvorrichtung (94), die zum Drängen der Positionierungsvorrichtung (80) in die Eingriffsposition eingerichtet ist.

47. Das Verfahren gemäß Anspruch 42, ferner mit dem Schritt des Vorsehens eines Verkleidungsabschnitts (32), der zum Koppeln mit dem Schienenelement (20) eingerichtet ist.

48. Das Verfahren gemäß Anspruch 42, ferner mit dem Schritt des Vorsehens eines Betätigers (82), der zum Bewegen der Positionierungsvorrichtung (80) zwischen der Eingriffsposition und der Freigabeposition eingerichtet ist.

49. Das Verfahren gemäß Anspruch 42, ferner mit dem Schritt des Vorsehens eines Elektrifizierungssystems, dass zum Koppeln mit dem Schienenelement (20) zum Liefern von Elektrizität von einer Fahrzeug-Elektrizitätsquelle zu dem Artikel (12) eingerichtet ist.

50. Das Artikelbefestigungssystem gemäß Anspruch 1, wobei der Halter (60) zumindest teilweise das längliche Schienenelement (20) und eine laterale Erweiterung umgibt und einen Arm (62,64) aufweist, der in den Raum (44) vorsteht,
und wobei das Gleitstück (66) ein nicht-drehbares Element mit niedriger Reibung aufweist, das zwischen dem Arm (62,64) und der Schiebe-Schnittstelle (34,38) koppelt und konfiguriert ist, eine Bewegung des Artikels (12) entlang dem länglichen Schienenelement (20) zu ermöglichen.

51. Das System gemäß Anspruch 50, wobei das Fahrzeug einen Fahrzeug-Innenabschnitt umfasst.

52. Das System gemäß Anspruch 50, wobei das Fahrzeug einen Fahrzeug-Außenabschnitt umfasst.

53. Das System gemäß Anspruch 52, wobei der Fahrzeug-Außenabschnitt ein Ladungs-Aufnahmebereich ist.

54. Das System gemäß Anspruch 50, wobei das längliche Schienenelement (20) eine laterale Erweiterung (40,42) aufweist, welche die Schiebe-Schnittstelle (34,38) aufweist, und der Arm (62,64) zumindest teilweise unter die laterale Erweiterung (40,42) vorsteht, um den Artikel (20) relativ zu dem länglichen Schienenelement (20) zu bewegen.

55. Das System gemäß Anspruch 54, wobei das längliche Schienenelement (20) ferner zwei laterale Erweiterungen (40,42) und zwei Schiebe-Schnittstellen (34,38) umfasst.

56. Das System gemäß Anspruch 50, ferner mit einem Elektrifizierungssystem mit zumindest einem elastischen Kontakt (122) der zum Liefern von Elektrizität von einer Fahrzeug-Elektrizitätsquelle zu dem Artikel (12) konfiguriert ist.

## Revendications

1. Système de fixation d'article (10) pour un véhicule, comprenant :
un élément formant rail allongé (20) adapté pour se fixer sur le véhicule ;
l'élément formant rail (20) définissant au moins un espace partiellement clos (44) ayant au moins une interface de coulissement (34, 38) et une pluralité de saillies (48) ;
une console (60) mettant en prise de manière opérationnelle l'élément formant rail allongé (20) et adaptée pour monter au moins un article (12) ;
un dispositif de positionnement (80) mettant en prise de manière opérationnelle la console (60) et ayant au moins une extension (84, 86) adaptée pour se déplacer entre une position mise en prise adaptée pour fixer l'article (12) sur l'élément formant rail allongé (20) et une position débloquée adaptée pour déplacer l'article (12) par rapport à l'élément formant rail allongé (20),
**caractérisé en ce que** la au moins une interface de coulissement (34, 38) est prévue le long d'une surface intérieure de l'élément formant rail (20) et la console (60) a au moins un patin (66) qui met en prise de manière coulissante l'interface de coulissement sur la surface intérieure de l'élément formant rail allongé.

2. Système de fixation d'article (10) selon la revendication 1, dans lequel l'élément formant rail allongé (20) est orienté de manière longitudinale à l'intérieur du véhicule.

3. Système de fixation d'article (10) selon la revendication 1, dans lequel l'élément formant rail allongé (20) est orienté latéralement à l'intérieur du véhicule.

4. Système de fixation d'article (10) selon la revendication 1, dans lequel l'élément formant rail allongé (20) est adapté pour se fixer sur une partie externe du véhicule.

5. Système de fixation d'article (10) selon la revendication 1, dans lequel l'élément formant rail allongé (20) est adapté pour se fixer sur une partie intérieure du véhicule.

6. Système de fixation d'article (10) selon la revendication 1, dans lequel l'élément formant rail allongé (20) s'étend vers une position avant adaptée pour permettre à l'article (12) de s'emboîter avec un tableau de bord dans le véhicule.

7. Système de fixation d'article (10) selon la revendication 1, dans lequel l'élément formant rail allongé (20) est au moins un segment de rail adapté pour être sélectivement couplé et découplé d'un autre segment de rail.

8. Système de fixation d'article (10) selon la revendication 1, dans lequel l'élément formant rail allongé (20) et la console (60) sont configurés pour retenir l'article (12) verticalement.

9. Système de fixation d'article (10) selon la revendication 1, dans lequel l'élément formant rail allongé (20) comprend une bande conductrice fixe (120) adaptée pour fournir un courant électrique à l'article (12).

10. Système de fixation d'article (10) selon la revendication 9, dans lequel la bande conductrice (120) est couplée à l'élément formant rail (20) par un support (114) ayant au moins un dispositif de réglage de tolérance (116).

11. Système de fixation d'article (10) selon la revendication 9, dans lequel la console (60) comprend un contact (122) sollicité pour la mise en prise coulissante avec la bande conductrice (120).

12. Système de fixation d'article (10) selon la revendication 1, dans lequel le au moins un patin (66) est deux patins.

13. Système de fixation d'article (10) selon la revendication 12, dans lequel le patin (66) est un matériau à faible frottement présentant une haute lubrification.

14. Système de fixation d'article (10) selon la revendication 1, dans lequel la console (60) comprend en outre des roues (62, 64) mettant en prise de manière opérationnelle l'interface de coulissement (34, 38).

15. Système de fixation d'article (10) selon la revendication 1, dans lequel l'interface de coulissement (34, 38) comprend en outre un dispositif de positionnement latéral (36).

16. Système de fixation d'article (10) selon la revendication 1, comprenant en outre une pièce de bord (32) couplée à l'élément formant rail allongé (20).

17. Système de fixation d'article (10) selon la revendication 1, dans lequel l'élément formant rail allongé (20) est adapté pour recevoir de manière mobile l'article (12).

18. Système de fixation d'article (10) selon la revendication 1, dans lequel l'article (12) est l'un parmi une console centrale, un bac de stockage, un compartiment, un dispositif de gestion de chargement, un support, une console de montage d'article, une grille de stockage, un siège de sécurité enfant, un strapontin, une plateforme de stockage, une table, un article de loisir ou un article de sport.

19. Système de fixation d'article (10) selon la revendication 1, dans lequel le dispositif de positionnement (80) est sollicité dans une direction à correction automatique.

20. Système de fixation d'article (10) selon la revendication 1, dans lequel le dispositif de positionnement (80) comprend un actionneur (82) capable d'effectuer un actionnement à distance et pouvant fonctionner pour déplacer l'extension (84, 86) entre la position mise en prise et la position débloquée.

21. Système de fixation d'article (10) selon la revendication 1, dans lequel l'élément formant rail allongé (20) comprend un premier conducteur électrique (120) et au moins un canal partiellement dissimulé (44) ayant une interface de coulissement (34, 38) ;
et dans lequel le patin (66) comprend au moins un patin non rotatif mettant en prise de manière coulissante l'interface de coulissement (34, 38) pour un mouvement longitudinal le long de l'élément formant rail allongé (20) et la console (60) comprend un second conducteur électrique (122) configuré pour mettre en prise de manière mobile le premier conducteur électrique (120).

22. Système de fixation d'article (10) selon la revendication 21, dans lequel l'élément formant rail allongé (20) comprend une pluralité d'éléments de positionnement (48).

23. Système de fixation d'article (10) selon la revendication 21, dans lequel le dispositif de positionnement (80) comprend un actionneur (82) adapté pour l'actionnement à distance de l'article (12).

24. Système de fixation d'article (10) selon la revendication 21, dans lequel l'élément formant rail allongé (20) comprend au moins une partie d'extension latérale (40, 42).

25. Système de fixation d'article (10) selon la revendication 21, dans lequel l'élément formant rail allongé (20) est formé de manière solidaire avec une partie de plancher du véhicule.

26. Système de fixation d'article (10) selon la revendication 21, dans lequel l'élément formant rail allongé (20) comprend une pièce d'extrémité (22) adaptée pour limiter la position de l'article (12).

27. Système de fixation d'article (10) selon la revendication 21, dans lequel le dispositif de positionnement (80) comprend au moins un élément de verrouillage (84, 86) mettant en prise de manière opérationnelle l'actionneur (82) pour l'extension et la rétraction dans une direction latérale.

28. Système de fixation d'article (10) selon la revendication 27, dans lequel la console (60) et le dispositif de positionnement (80) coagissent par l'intermédiaire d'un dispositif de sollicitation (94).

29. Système de fixation d'article (10) selon la revendication 28, dans lequel le dispositif de sollicitation (94) est un ressort.

30. Système de fixation d'article (10) selon la revendication 29, dans lequel le dispositif de sollicitation (94) fournit une interaction à correction automatique entre l'élément de verrouillage (84, 86) et l'élément formant rail allongé (20).

31. Système de fixation d'article (10) selon la revendication 21, dans lequel le patin (66) est configuré pour se coupler à la console (60) uniquement dans une seule orientation.

32. Système de fixation d'article (10) selon la revendication 1, comprenant :
un système d'électrification configuré pour fournir une source d'électricité de l'élément formant rail (20) à l'article (12) ; et
un actionneur (82) adapté pour déplacer le dispositif de positionnement (80) entre une position mise en prise dans laquelle le mouvement de l'article (12) est empêché et une position débloquée dans laquelle le mouvement de l'article (12) est permis.

33. Système (10) selon la revendication 32, dans lequel l'élément formant rail (20) comprend une pluralité de saillies (48) disposées à l'intérieur de l'espace (44) partiellement clos.

34. Système (10) selon la revendication 33, dans lequel l'élément formant rail (20) comprend une pluralité de saillies (48) uniquement sur un seul côté de l'élément formant rail (20).

35. Système (10) selon la revendication 32, dans lequel le patin (66) est adapté pour s'interfacer entre la console (60) et la surface intérieure.

36. Système (10) selon la revendication 32, dans lequel le patin (66) ne tourne pas.

37. Système (10) selon la revendication 32, dans lequel le système d'électrification comprend en outre une bande conductrice (120) couplée à l'élément formant rail (20).

38. Système (10) selon la revendication 32, comprenant en outre une pièce d'extrémité (22) adaptée pour se coupler à une extrémité de l'élément formant rail (20).

39. Système (10) selon la revendication 32, comprenant en outre un dispositif de sollicitation (94) adapté pour solliciter le dispositif de positionnement (80) dans une direction de correction automatique.

40. Système (10) selon la revendication 32, dans lequel l'article (12) est l'un parmi un bac de stockage, un compartiment, un dispositif de gestion de chargement, un support, une console de montage d'article, une grille de stockage, un support d'article, un siège de sécurité enfant, un strapontin, une plateforme de stockage, une table, un article de loisir ou un article de sport.

41. Système (10) selon la revendication 32, dans lequel l'élément formant rail (20) est une pluralité de segments d'élément formant rail adaptés pour être sélectivement couplés et découplés.

42. Procédé permettant de proposer un système de fixation d'article (10) destiné à être utilisé dans un intérieur de véhicule, le procédé comprenant les étapes consistant à :
prévoir un élément formant rail (20) adapté pour se coupler au véhicule, l'élément formant rail (20) définissant un espace (44) partiellement clos ayant une interface de coulissement (34, 38) ;
prévoir une console (60) entourant au moins partiellement l'élément formant rail (20) et adaptée pour recevoir un article (12) ;
prévoir au moins un bras (62, 64) s'étendant à partir de la console (60) dans l'espace (44) partiellement clos, le bras (62, 64) comprenant un patin (66) adapté pour mettre en prise l'interface de coulissement (34, 38) ;
coupler un dispositif de positionnement (80) à la console (60), le dispositif de positionnement (80) étant adapté pour un mouvement entre une position mise en prise dans laquelle le dispositif de positionnement (80) met en prise l'élément formant rail (20) et une position débloquée dans laquelle le dispositif de positionnement (80) est sensiblement dépourvu de mise en prise par rapport à l'élément formant rail (20) ; et
coupler l'article (12) à l'élément formant rail (20).

43. Procédé selon la revendication 42, dans lequel l'interface de coulissement (34, 38) fournit une interface pouvant coulisser avec le patin (66).

44. Procédé selon la revendication 42, dans lequel l'interface de coulissement (34, 38) fournit une interface non rotative avec la console (60).

45. Procédé selon la revendication 42, dans lequel l'interface de coulissement (34, 38) fournit une interface fixe avec la console (60).

46. Procédé selon la revendication 42, comprenant en outre l'étape consistant à prévoir un dispositif de sollicitation (94) adapté pour pousser le dispositif de positionnement (80) dans la position mise en prise.

47. Procédé selon la revendication 42, comprenant en outre l'étape consistant à prévoir une partie de bord (32) adaptée pour se coupler à l'élément formant rail (20).

48. Procédé selon la revendication 42, comprenant en outre l'étape consistant à prévoir un actionneur (82) adapté pour déplacer le dispositif de positionnement (80) entre la position mise en prise et la position débloquée.

49. Procédé selon la revendication 42, comprenant en outre l'étape consistant à prévoir un système d'électrification adapté pour se coupler à l'élément formant rail (20) pour fournir l'électricité d'une source d'électricité de véhicule à l'article (12).

50. Système de fixation d'article selon la revendication 1, dans lequel la console (60) entoure au moins partiellement l'élément formant rail allongé (20) et l'extension latérale et ayant un bras (62, 64) faisant saillie dans l'espace (44) ;
et dans lequel le patin (66) comprend un élément non rotatif à faible frottement qui s'interface entre le bras (62, 64) et l'interface de coulissement (34, 38) configurée pour permettre le mouvement de l'article (12) le long de l'élément formant rail allongé (20).

51. Système selon la revendication 50, dans lequel le véhicule comprend une partie intérieure de véhicule.

52. Système selon la revendication 50, dans lequel le véhicule comprend une partie extérieure de véhicule.

53. Système selon la revendication 52, dans lequel la partie extérieure de véhicule est une zone de stockage de chargement.

54. Système selon la revendication 50, dans lequel l'élément formant rail allongé (20) comprend une extension latérale (40, 42) qui comprend l'interface de coulissement (34, 38) et le bras (62, 64) fait saillie au moins partiellement au-dessous de l'extension latérale (40, 42) pour déplacer l'article (20) par rapport à l'élément formant rail allongé (20).

55. Système selon la revendication 54, dans lequel l'élément formant rail allongé (20) comprend en outre deux extensions latérales (40, 42) et deux interfaces de coulissement (34, 38).

56. Système selon la revendication 50, comprenant en outre un système d'électrification ayant au moins un contact élastique (122) configuré pour fournir de l'électricité d'une source électrique de véhicule à l'article (12).
